# FASCICULE DE BREVET EUROPEEN

(11) **EP 0 951 152 B1**
(45) Date de publication et mention de la délivrance du brevet: **27.09.2006**
(21) Numéro de dépôt: 99400888.6
(22) Date de dépôt: 12.04.1999
(51) Int. Cl.: H04B 7/08

(54) **Recepteur à diversité**
Diversity-Empfänger
Diversity receiver

(30) Priorité: 16.04.1998 FR 9804751
(43) Date de publication de la demande: 20.10.1999
(73) Titulaire: ALCATEL, 75008 Paris (FR)
(72) Inventeur: Delprat, Marc, 78150 Le Chesnay (FR); Dartois, Luc, 78955 Carrières Sous Poissy (FR)
(74) Mandataire: Maiwald, Walter

(56) Documents cités:
- EP-A- 0 639 035
- WO-A-98/53560
- US-A- 5 402 451
- US-A- 5 621 769
- US-A- 5 710 995

## Description

La présente invention a pour objet un récepteur à diversité, c'est à dire un récepteur raccordé à plusieurs antennes et capable de composer, pour des signaux radioélectriques qu'il reçoit, une meilleure configuration de réception. Dans l'invention, on se limitera à une structure à deux antennes. Le problème technique à résoudre avec l'invention est celui de l'utilisation optimale d'un tel récepteur à diversité. L'invention est particulièrement applicable au domaine de la téléphonie mobile, notamment cellulaire.

Dans ce domaine, des stations de base (BTS) de réseaux cellulaires numériques emploient classiquement deux antennes pour améliorer la qualité de réception en traitant les signaux reçus sur les deux antennes. Si le signal n'est perturbé que par du bruit (typiquement en environnement rural), et si les deux antennes sont suffisamment éloignées pour que les signaux de bruit reçus sur les deux antennes soient parfaitement décorrélés, le gain théorique sur les performances de la station de base en réception est de 3 dB par rapport au cas d'une antenne unique. En pratique les antennes sont espacées de typiquement 20 λ (où λ est la longueur d'onde moyenne correspondant à la bande de fréquence en réception, ex : λ ≅ 30cm dans le cas du GSM). Ceci assure une bonne décorrélation. Mais celle-ci n'est pas parfaite. Le gain typique en environnement rural est donc de l'ordre de 2 dB.

Par ailleurs en présence de multi-trajets des phénomènes d'évanouissement (fading) se produisent, qui peuvent faire pratiquement disparaître le signal reçu sur une antenne (atténuation > 20 dB) pendant une durée variable en fonction de la vitesse du mobile. Ainsi dans le cas d'un mobile GSM se déplaçant à 3 km/h, en environnement urbain, des trames entières peuvent être perdues. La diversité d'antenne en réception permet de combattre ce phénomène car l'espacement des deux antennes évite en général qu'elles se trouvent toutes les deux simultanément dans un trou d'évanouissement dit «trou de fading ». Statistiquement, il y a une forte probabilité que le signal reçu soit bon sur au moins une des deux antennes. Le gain de diversité est généralement dans ce cas de l'ordre de 4 à 6 dB.

Le gain de diversité est donc très dépendant de l'environnement. Mais il dépend également de l'efficacité des traitements effectués pour composer ensemble les signaux reçus sur les deux antennes. Le but est ici d'optimiser ces traitements pour améliorer les performances moyennes des récepteurs à diversité.

Les meilleures solutions existantes sont les suivantes. Il existe deux types principaux de traitement de diversité, la commutation d'antenne («switched diversity ») et la combinaison d'antennes («diversity combining »):

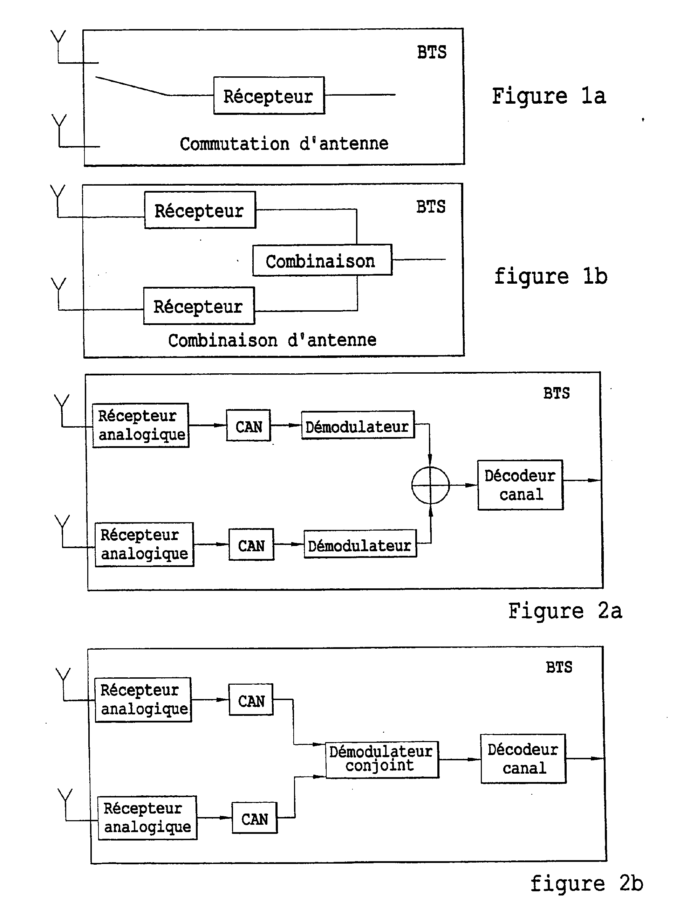

La commutation d'antenne, figure 1a, consiste typiquement à choisir entre deux antennes celle qui fournit le signal le plus fort. Elle ne nécessite qu'un seul récepteur mais ne donne que des performances limitées. Dans les systèmes analogiques, elle est utilisée plus souvent que la combinaison d'antennes, car cette dernière nécessite un récepteur numérique si on ne veut pas trop augmenter la complexité du récepteur. La commutation d'antennes peut bien entendu être aussi utilisée avec des récepteurs numériques.

La combinaison d'antennes, figure 1b, est généralement la méthode retenue dans les systèmes numériques. Elle est plus complexe car elle nécessite deux récepteurs. Mais la combinaison des deux signaux reçus permet de meilleures performances. On détaille ci-dessous deux modes connus de réalisation de la diversité par combinaison d'antennes.

Dans le premier cas, figure 2a, les deux chemins de réception restent séparés jusqu'à la sortie d'un démodulateur égaliseur et la combinaison s'effectue typiquement en ajoutant une à une des décisions souples («soft bits ») représentant typiquement la log-vraisemblance de la valeur zéro ou un du bit transmis. Ces décisions souples sont fournies par les démodulateurs égaliseurs des deux voies de réception. Cette méthode est dite «maximum ratio combining ». On obtient ainsi pour chaque bit à décoder une information de vraisemblance qui combine la vraisemblance de ce bit pour les deux voies de réception. En pratique la combinaison peut être une addition de décisions pondérées affectées d'un signe positif ou négatif, selon que le bit testé est un un ou un zéro. Cette méthode donne de bons résultats s'il existe beaucoup de multi-trajets. C'est le cas en zone urbaine.

Dans ce cas en effet, s'il existe un trou d'évanouissement pour une antenne, le démodulateur de cette antenne délivrera un signal (zéro ou un) sans signification réelle (puisque la réception est mauvaise), mais aussi avec une vraisemblance faible. Le signal reçu sur l'autre antenne va alors automatiquement imposer ses caractéristiques. Ceci est équivalent à une sélection. Le résultat global reste toutefois meilleur que celui correspondant à la sélection proprement dite car, par ailleurs, il se produit de nombreuses situations où les signaux reçus sur les deux antennes sont assez bruités. La combinaison qui conforte la vraisemblance d'un signal par celle de l'autre apporte alors ses effets bénéfiques. On utilisera par la suite d'une manière exclusive le terme de combinaison pour désigner un traitement par lequel on évalue les vraisemblances, pour un signal, d'avoir une valeur donnée et par lequel on attribue à cette valeur donnée une vraisemblance correspondant aux vraisemblances évaluées: leur somme dans le cas de la méthode maximum ratio combining, ou la plus forte de ces deux vraisemblance, ou autre méthode.

Dans le second cas, figure 2b, la démodulation égalisation est effectuée de manière conjointe en utilisant des symboles reçus sur les deux voies. Typiquement, les premières étapes de la démodulation (estimation de la réponse impulsionnelle du canal, correction de l'écart de fréquence,...) sont effectuées séparément pour chaque voie, puis l'égalisation proprement dite est effectuée de manière conjointe. Ainsi dans le cas d'un égaliseur de Viterbi, les deux treillis correspondant aux deux voies peuvent être parcourus en parallèle et des décisions être prises conjointement en tenant compte des deux métriques locales. L'égalisation conjointe, qui est aussi une combinaison au sens ci-dessus, devrait théoriquement être légèrement meilleure et de complexité comparable par rapport à la combinaison après démodulation et égalisation individuelle.

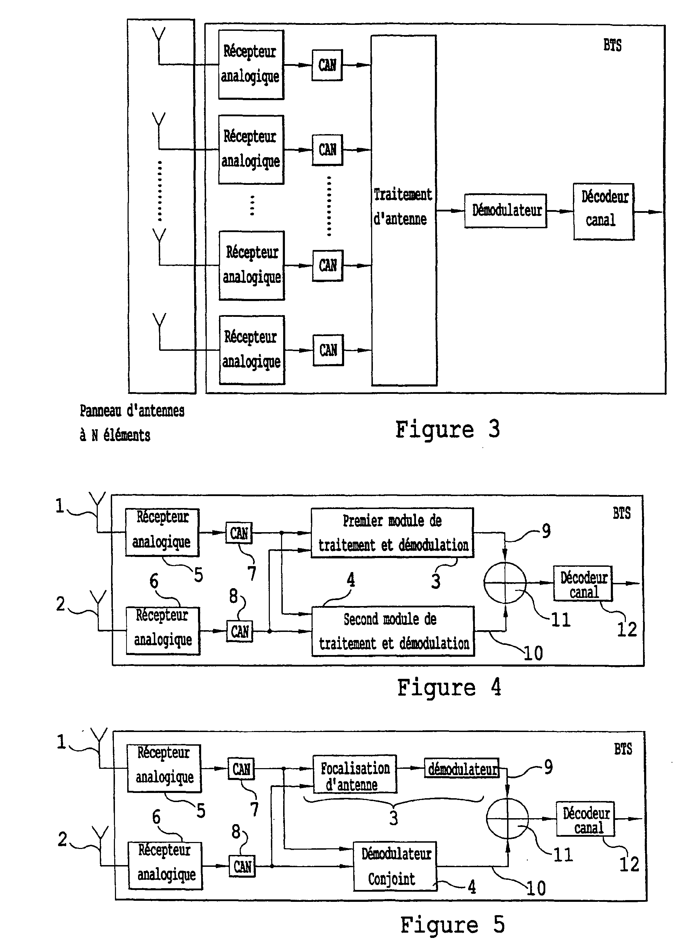

Par ailleurs on mentionnera également comme art antérieur les systèmes dits à antenne intelligente («smart antenna »), figure 3, qui font intervenir un panneau à N éléments d'antenne (typiquement N=8) suivi de N récepteurs analogiques et d'un algorithme de traitement d'antenne effectuant une recombinaison en phase et en amplitude des N signaux d'entrée avant démodulation.

De façon schématique on peut interpréter ce dernier traitement d'antenne comme une formation de faisceau, une focalisation. Avec cette focalisation, la station de base pointe un faisceau en direction du mobile. On obtient ainsi un gain de directivité qui est théoriquement de 10log₁₀(N) dB, qui vaut par exemple 9 dB si N=8. Il existe de nombreux algorithmes de focalisation d'antenne, plus ou moins complexes, et différentes contraintes sur la réalisation des récepteurs et du panneau d'antenne suivant les objectifs visés (simple maximisation du niveau de signal reçu, ou annulation d'interférence). Notamment il est connu en annulation d'interférence de modifier la directivité au point d'éliminer une contribution radioélectrique dont le caractère d'interférence a été mesuré. Il existe également des configurations plus complexes, auxquelles on ne s'intéresse pas ici, avec traitement d'antenne en émission et en réception (donc multi-récepteurs et multi-émetteurs).

On considérera dans l'invention les systèmes de traitement d'antenne en réception. Mais dans l'invention, quand une focalisation d'antenne sera mise en jeu, elle ne concernera que deux antennes. De préférence ces systèmes de traitement d'antenne fonctionneront avec un simple critère de maximisation de l'énergie reçue, tel l'algorithme connu dit « optimum ratio », sans contrainte sur l'espacement des deux antennes ni sur la calibration des récepteurs. Un tel algorithme de maximisation d'énergie revient en effet à déphaser un signal reçu sur une antenne par rapport à celui reçu sur l'autre, et à rechercher un déphasage pour lequel l'énergie reçue est maximale. En agissant ainsi, on règle en même temps des éventuels problèmes qui pourraient survenir du fait des déphasages des convertisseurs qui convertissent les signaux reçus en signaux en bande de base.

Cette limitation n'empêche pas l'annulation d'interférence. En effet, si une interférence est connue, par exemple par analyse à posteriori, on pourra dans ce cadre rechercher, dans un même esprit, un déphasage qui minimise un pic d'énergie qui est second en amplitude derrière un pic maximal d'énergie reçue.

L'utilisation de deux antennes rend par ailleurs le système compatible avec n'importe quel autre type de traitement de diversité.

Les solutions de traitement de la diversité décrites ci-dessus doivent être améliorées. Notamment leurs performances sont faibles lorsqu'il n'y a pas de multi-trajets (gain de 2,5 dB tout au plus).

De plus, les systèmes à focalisation d'antenne sont souvent trop complexes et la taille des panneaux d'antenne ainsi que les nombreux câbles requis rendent leur installation difficile. Par ailleurs, les éléments d'antenne des panneaux utilisés sont faiblement espacés (pour limiter la surface du panneau mais aussi parce que certains algorithmes nécessitent un espacement inférieur à λ/2) et ces systèmes sont donc peu efficaces pour combattre les multi-trajets (faible gain de diversité).

L'amélioration selon l'invention des performances des récepteurs des stations de base, notamment dans le cadre du GSM est d'une importance stratégique car elle conditionne la sensibilité en réception qui elle-même détermine la couverture d'une cellule. La sensibilité de la station de base influence directement le nombre de sites requis (et donc le coût) pour qu'un opérateur assure la couverture d'un territoire donné.

L'invention a donc pour objet d'augmenter ces performances en effectuant une combinaison de signaux produits par deux systèmes de diversité tels que ceux décrits ci-dessus. De ce fait on est sûr d'obtenir un gain supérieur ou égal au meilleur des deux gains des solutions précédentes, et non plus alternativement un gain ou un autre. Dans une solution perfectionnée, un des systèmes de diversité comportera un algorithme de focalisation d'antenne (limité dans ce cas à deux antennes) et l'autre comportera un traitement de combinaison. Ceci permet de bénéficier à la fois d'un gain de diversité et d'un gain de directivité.

Par ailleurs, le document US ―A-5 710 995 décrit un récepteur à diversité comportant deux antennes, un premier circuit de traitement recevant les signaux des deux antennes, un deuxième circuit de traitement recevant les signaux des deux antennes et effectuant un traitement différent du premier circuit de traitement, et un circuit de sélection sélectionnant la sortie de l'un ou l'autre de ces circuits de traitement.

Par ailleurs, le document US3737783 décrit un dispositif pour améliorer le rapport signal-sur-bruit pour le traitement de signaux à bande étroite reçus par deux antennes et resepctivement délivrés à l'une et à l'autre de deux entrées sous la forme de signaux identiques sur lesquels est superposé un bruit quasi-identique différent. Le dispositif forme la somme et la différence des signaux affectés par le bruit reçus sur ces entrées et ladite différence est traitée dans un circuit comportant des moyens de régulation d'amplitude, un premier et un second corrélateur ayant chacun deux entrées à l'une desquelles est appliquée ladite somme et à l'autre desquelles est appliqué, pour ledit premier corrélateur, ladite différence régulée en amplitude, et pour ledit second corrélateur, ladite différence retardée d'un intervalle de temps fixe.

L'invention a donc pour objet un récepteur à diversité comportant deux antennes, une première voie de réception, une deuxième voie de réception, et un circuit de composition, caractérisé en ce qu'il comporte un premier module de traitement dans la première voie pour recevoir les signaux des deux antennes, un deuxième module de traitement dans la deuxième voie pour recevoir aussi les signaux des deux antennes, le premier module de traitement effectuant un traitement différent du traitement effectué par le deuxième module de traitement, le circuit de composition étant un circuit de combinaison relié en entrée aux sorties des deux modules de traitement pour combiner les signaux traités délivrés par ces deux modules de traitement et pour produire un signal combiné.

L'invention sera mieux comprise à la lecture de la description qui suit et à l'examen des figures qui l'accompagnent. Celles-ci ne sont données qu'à titre indicatif et nullement limitatif de l'invention. Les figures montrent:
Figures 1a, 1b, 2a, 2b et 3 : les systèmes de diversité connus dans l'état de la technique,
Figure 4 : le schéma général d'un récepteur à diversité selon l'invention,
Figure 5 : un mode de réalisation préféré du récepteur à diversité selon l'invention.

La figure 4 montre un schéma général de la solution du récepteur à diversité de l'invention. Ce récepteur à diversité comporte deux antennes 1 et 2 et deux voies de traitement respectivement 3 et 4. D'une manière connue, les antennes sont reliées aux voies de traitement par l'intermédiaire de récepteurs analogiques respectivement 5 et 6 suivis, en aval, de convertisseurs analogiques numériques 7 et 8. Les récepteurs analogiques 5 et 6 effectuent simplement une conversion du signal radioélectrique reçu sur les antennes 1 et 2 pour produire un signal en bande de base, c'est-à-dire débarrassé de toutes les composantes de porteuses. Le récepteur analogique 5 ou 6 effectue, notamment dans le cadre du GSM, une conversion qui tient compte pour chaque signal d'une fréquence de sous-porteuse qui lui a été attribuée. Les convertisseurs analogique - numérique 7 et 8 produisent, au rythme GSM dans le cadre du GSM, une quantification des signaux reçus. Chacune des voies 3 et 4 de traitement, comporte un module de traitement qui reçoit les signaux quantifiés des deux antennes 1 et 2, après réception analogique et conversion analogique numérique. Les traitements des modules 3 et 4 sont des traitements de diversité évoqués ci-dessus.

Par exemple, ces traitements de diversité peuvent être de trois types: une commutation d'antennes, une combinaison de signaux d'antennes, ou un traitement de focalisation. Les traitements effectués dans les modules 3 et 4 sont différents. Néanmoins, ceci peut conduire à réaliser les modules de traitement 3 et 4 d'une même manière. On peut par exemple munir chacun de ces modules 3 et 4 de fonctions de commutation d'antennes, de combinaison de signaux d'antennes et de traitement de focalisation. On peut alors prévoir en outre une sélection de ces fonctions pour atteindre dans les deux modules réalisés la meilleure composition possible de deux de ces traitements parmi les trois traitements possibles évoqués.

Par exemple, le premier module de traitement et de démodulation pourra effectuer une commutation d'antennes et délivrer sur sa sortie 9 le signal le plus fort de ceux reçus sur les antennes 1 et 2. De même, le second traitement et le second démodulateur pourront correspondre à une combinaison de signaux d'antennes au sens de la figure 1b Le signal délivré par le module 4 est disponible à la sortie 10.

Les signaux disponibles aux sorties 9 et 10 seront traités dans un circuit de combinaison 11 pour en extraire une vraisemblance attribuée à une valeur de signal. Par exemple, les signaux disponibles sur les sorties 9 et 10 seront (comme c'est connu dans l'état de la technique) codés sur 5 bits. Dans ce cas la vraisemblance, si elle est cumulée, sera quantifiée sur 6 bits. Un bit de signe permettra de déterminer la vraisemblance de chacun des deux états binaires du bit testé (zéro ou un). Le circuit de combinaison 11 sera donc, de ce point de vue, analogue à ceux qui étaient présentés figures 2a ou 2b. Notamment, les modules 3 et 4 pourront effectuer une partie démodulation suivie d'une partie égalisation. Dans ce cas, le circuit 11 peut, conformément à la figure 2b réaliser en commun l'égalisation relative au traitement du module 3 (qui peut simplement correspondre à une sélection) et du module 4 qui est lui-même déjà une combinaison des signaux des antennes 1 et 2.

Pour simplifier l'explication, dans le cas où le signal disponible sur l'antenne 1 serait supérieur au signal disponible sur l'antenne 2, et où le premier module de traitement 3 serait un circuit de commutation d'antennes, le signal de l'antenne 1 interviendrait deux fois dans le circuit 11. Il interviendrait une première fois par l'intermédiaire du module 3 de traitement jouant un rôle de commutation, et une deuxième fois en combinaison avec le signal de l'antenne 2 dans le module 4 jouant déjà un rôle de combinaison.

La figure 5 montre une solution préférée du récepteur à diversité de l'invention dans laquelle le module 3 effectue un traitement de focalisation d'antennes suivi d'une démodulation pour produire à sa sortie 9 les signaux de vraisemblance. Le traitement du premier module 3 est constitué d'un algorithme de focalisation d'antenne combinant les deux voies, suivi d'un démodulateur classique. Le traitement de focalisation d'antenne est de préférence un algorithme qui maximise l'énergie du signal obtenu par combinaison en phase et amplitude des signaux d'entrée, notamment du type algorithme «optimum ratio ». Le démodulateur classique est un démodulateur avec égaliseur de Viterbi. Le second traitement du module 4 effectue d'une manière préférée une combinaison de signaux d'antennes. Il pourra comporter lui aussi, comme démodulateur (conformément à la figure 2a) ou comme démodulateur conjoint (conformément à la figure 2b), un égaliseur de Viterbi. Dans le cas où il comporte un démodulateur conjoint, celui-ci intégrera préférentiellement un égaliseur de Viterbi conjoint.

Le circuit de combinaison 11 est ensuite suivi d'un décodeur de canal 12 chargé d'interpréter les signaux de vraisemblance pour produire, à titre de signaux survivants, les signaux qui le plus vraisemblablement ont été envoyés par l'émetteur à destination de la station de base. Dans le cadre du GSM, le décodeur de canal 12 comportera par exemple un décodeur de Viterbi pour décoder des signaux de parole codés par un code convolutif, et un décodeur de type Fire pour décoder des signaux de signalisation codés par un codage en blocs.

La combinaison des signaux (décisions souples) dans le circuit 11 en sortie des deux traitements s'effectue par la méthode «maximum ratio combining » (c'est à dire par addition des informations de log-vraisemblance pour chaque bit). Le démodulateur 12 sera du type de ceux connus dans l'état de la technique, figure 2a.

Les modules de traitement comportent en pratique un processeur de traitement de type DSP associé à un programme de traitement.

Avec la solution avec focalisation de l'invention, les deux antennes sont typiquement espacées de 20λ. Du fait du faible nombre d'antennes utilisé (deux seulement), la focalisation ne sera pas très précise. Ainsi une antenne dont la directivité est de 120° sera couplée avec une autre antenne du même type (dépointée par déphasage ou retard), de façon à conduire à une ouverture angulaire de 60° et à un gain de 3 dB dans la direction visée.

La solution proposée permet d'améliorer les performances du récepteur en combinant les performances individuelles de deux algorithmes de diversité différents. En effet, les algorithmes de diversité classiques sont souvent performants pour certains profils (type de canal de propagation) et peu performants pour d'autres. La combinaison des signaux en sortie des deux branches permet de garantir que les performances de la solution proposée seront, dans tous les cas, au moins aussi bonnes que celles obtenues avec le meilleur des deux traitements mis en oeuvre. Suivant les conditions de propagation rencontrées (par exemple rural ou urbain), le gain de performance sera principalement apporté par l'un ou l'autre des traitements. Mais, en particulier dans le cas du mode de réalisation préféré, le gain de performance sera obtenu en combinant les gains de combinaison et de focalisation des deux traitements.

La solution de l'invention est plus complexe que celles actuellement mises en oeuvre dans les stations de base. Cependant la puissance de calcul requise reste raisonnable et en particulier un algorithme de focalisation d'antenne du type «optimum ratio » avec deux antennes ne requiert qu'environ 2 Mips (méga instructions par seconde) de puissance de calcul supplémentaire. Par ailleurs la solution proposée nécessite de transmettre les deux signaux des deux voies de réception vers chaque module de traitement.

## Revendications

1. Récepteur à diversité comportant deux antennes (1, 2) une première voie (3, 5, 7) de réception, une deuxième voie (4, 6, 8) de réception, et un circuit (11) de composition, un premier module (3) de traitement dans la première voie pour recevoir les signaux des deux antennes, un deuxième module (4) de traitement dans la deuxième voie pour recevoir les signaux des deux antennes, le premier module de traitement effectuant un traitement de type différent du traitement effectué par le deuxième module de traitement, le circuit de composition étant un circuit de combinaison relié en entrée aux deux modules de traitement pour combiner les signaux traités délivrés par ces deux modules de traitement et pour produire un signal combiné, et le premier et le deuxième module de traitement effectuant, chacun, un traitement parmi les trois types de traitement suivants :
- commutation d'antenne,
- combinaison de signaux d'antenne, ou
- traitement de focalisation.

2. Récepteur selon la revendication 1, **caractérisé en ce que** le premier module de traitement effectue un traitement de focalisation et le deuxième module de traitement effectue un traitement de combinaison.

3. Récepteur selon l'une des revendications 1 à 2, **caractérisé en ce que** le premier module effectue un traitement de focalisation à maximisation d'énergie, notamment du type optimum ratio.

4. Récepteur selon l'une des revendications 1 à 3, **caractérisé en ce que** le deuxième module de traitement effectue un traitement de combinaison avec un égaliseur de Viterbi conjoint.

5. Récepteur selon la revendication 1 , **caractérisé en ce que** le circuit de combinaison effectue une combinaison de type maximum ratio combining.

## Claims

1. A diversity receiver, comprising two antennas (1, 2), a first receiving channel (3, 5, 7), a second receiving channel (4, 6, 8) and a composing circuit (11), a first processing module (3) on the first channel for receiving the signals of both antennas, a second processing module (4) on the second channel for receiving the signals of both antennas, the first processing module performing processing of a different kind from the processing performed by the second processing module, the composing circuit being a combining circuit, which is linked at the input to both processing modules in order to combine the processed signals delivered by these two processing modules and produce a combined signal, and the first and second processing module respectively performing one of the following three processes:
- antenna switching,
- antenna signal combination, or
- focusing process.

2. The receiver according to claim 1, **characterized in that** the first processing module performs a focusing process, and the second processing module performs a combining process.

3. The receiver according to any of claims 1 to 2, **characterized in that** the first module performs a focusing process with energy maximization, in particular of the optimum ratio type.

4. The receiver according to any of claims 1 to 3, **characterized in that** the second processing module performs a combining process with a joint Viterbi combiner.

5. The receiver according to claim 1, **characterized in that** the combining circuit performs a combination of the maximum ratio combining type.

## Patentansprüche

1. Diversityempfänger, umfassend zwei Antennen (1, 2), einen ersten Empfangskanal (3, 5, 7), einen zweiten Empfangskanal (4, 6, 8) und einen Verknüpfungsschaltkreis (11), ein erstes Verarbeitungsmodul (3) in dem ersten Kanal, um die Signale der beiden Antennen zu empfangen, ein zweites Verarbeitungsmodul (4) in dem zweiten Kanal, um die Signale der beiden Antennen zu empfangen, wobei das erste Verarbeitungsmodul eine Verarbeitung anderer Art ausführt als die von dem zweiten Verarbeitungsmodul ausgeführte Verarbeitung, wobei der Verknüpfungsschaltkreis ein Kombinationsschaltkreis ist, der eingangs mit den beiden Verarbeitungsmodulen verbunden ist, um die verarbeiteten Signale, die von diesen beiden Verarbeitungsmodulen abgegeben werden, zu kombinieren und ein kombiniertes Signal zu erzeugen, und wobei das erste und zweite Verarbeitungsmodul jeweils eine von den drei folgenden Verarbeitungsarten ausführt:
- Antennenumschaltung,
- Kombination der Antennensignale oder
- Fokussierungsverarbeitung.

2. Empfänger nach Anspruch 1, **dadurch gekennzeichnet, dass** das erste Verarbeitungsmodul eine Fokussierungsverarbeitung und das zweite Verarbeitungsmodul eine Kombinationsverarbeitung ausführt.

3. Empfänger nach einem der Ansprüche 1 bis 2, **dadurch gekennzeichnet, dass** das erste Modul eine Fokussierungsverarbeitung mit Energiemaximierung, insbesondere von der Art des optimalen Verhältnisses, ausführt.

4. Empfänger nach einem der Ansprüche 1 bis 3, **dadurch gekennzeichnet, dass** das zweite Verarbeitungsmodul eine Kombinationsverarbeitung mit einem gemeinsamen Viterbi-Verbinder ausführt.

5. Empfänger nach Anspruch 1, **dadurch gekennzeichnet, dass** der Kombinationsschaltkreis eine Kombination von der Art optimalen Verhältnisses ausführt.
